# EUROPÄISCHE PATENTSCHRIFT

(11) **EP 4 469 877 B1**
(45) Veröffentlichungstag und Bekanntmachung des Hinweises auf die Patenterteilung: **19.11.2025**
(21) Anmeldenummer: 23702070.6
(22) Anmeldetag: 23.01.2023
(51) Int. Cl.: G05D 16/20, G05D 19/02, F15B 21/00, F04D 15/00, F04D 27/00, F04D 29/66, F15B 21/12

(54) **MESS- UND/ODER REGELUNGSVORRICHTUNG FÜR EIN FLUIDDYNAMISCHES SYSTEM UND KORRESPONDIERENDES VERFAHREN**
MEASURING AND/OR CONTROL DEVICE FOR A FLUID-DYNAMIC SYSTEM, AND CORRESPONDING METHOD
DISPOSITIF DE MESURE ET/OU DE COMMANDE POUR UN SYSTÈME FLUIDE-DYNAMIQUE ET PROCÉDÉ CORRESPONDANT

(30) Priorität: 25.01.2022 DE 102022101685
(43) Veröffentlichungstag der Anmeldung: 04.12.2024
(73) Patentinhaber: Universität Rostock Körperschaft des Öffentlichen Rechts, 18055 Rostock (DE)
(72) Erfinder: BÜKER, Johannes, 18211 Ostseebad Nienhagen (DE); LASS, Andre, 18057 Rostock (DE)
(74) Vertreter: Müller Verweyen
(86) Internationale Anmeldenummer: PCT/EP2023/051577
(87) Internationale Veröffentlichungsnummer: WO 2023/144097

(56) Entgegenhaltungen:
- JP-A- H05 332 491
- BÜKER JOHANNES ET AL: "Active noise cancellation applied to a centrifugal pump in a closed loop piping system", APPLIED ACOUSTICS, ELSEVIER PUBLISHING, GB, vol. 178, 2 March 2021 (2021-03-02), XP086534535, ISSN: 0003-682X, [retrieved on 20210302], DOI: 10.1016/J.APACOUST.2021.108003
- PAN M ET AL: "Hybrid Fluid-borne Noise Control in Fluid-filled Pipelines", JOURNAL OF PHYSICS: CONFERENCE SERIES, vol. 744, 1 September 2016 (2016-09-01), GB, pages 012016, XP055855898, ISSN: 1742-6588, Retrieved from the Internet <URL:http://stacks.iop.org/1742-6596/744/i=1/a=012016?key=crossref.64ec506642424c617db1b5b91c000b81> DOI: 10.1088/1742-6596/744/1/012016

## Beschreibung

Die vorliegende Erfindung betrifft eine Mess- und/oder Regelungsvorrichtung für ein fluiddynamisches System nach dem Oberbegriff des Anspruchs 1, ein fluiddynamisches System nach dem Oberbegriff von Anspruch 10 sowie ein korrespondierendes Verfahren nach dem Oberbegriff von Anspruch 13.

Fluiddynamische Systeme können offene oder geschlossene Systeme sein, in denen ein oder mehrere Fluide gefördert und/oder mit Druck beaufschlagt werden. Die Fluide können kompressibel (z.B. Gase, insbesondere Luft) oder inkompressibel (Flüssigkeiten, insbesondere Wasser oder Öl) sein. In fluiddynamischen Systemen können aktive Komponenten, beispielsweise Strömungs- oder Verdrängermaschinen, Pumpen, Stellventile, insbesondere elektrisch angetriebene Ventile, und/oder passive Komponenten, beispielsweise Kessel, Heizkörper und/oder Wärmetauscher mittels Leitungen bzw. Rohren verbunden sein, wodurch sich ein Rohrleitungssystem im fluiddynamischen System ergibt. Grundsätzlich bildet die Kombination von Strömungs- oder Verdrängermaschine und einer zugehörigen Anlage ein fluiddynamisches System. Fluiddynamische Systeme werden beispielsweise in Wasserversorgungs-, Heizungs- und/oder Klimaanlagen sowie in der Chemie- und Verfahrenstechnik ausgeführt.

Die fluiddynamischen Systeme können einen hohen Komplexitätsgrad erreichen und zeichnen sich durch eine Vielzahl möglicher Systemzustände aus, die durch die Anzahl und Einstellung der verbauten fluiddynamischen Komponenten, z.B. Armaturen, Ventile, Steller, Druckspeicher, Kessel, Becken sowie den Betriebszustand der Strömungs- oder Verdrängermaschine, z.B. Drehzahl, Volumenstrom, Förderhöhe, beschrieben werden können. Die Komplexität und zeitliche Variabilität des fluiddynamischen Systems können dazu führen, dass das fluiddynamische System üblicherweise nicht in diesem Sinne vermessbar bzw. identifizierbar ist.

In fluiddynamischen Systemen können insbesondere durch die aktiven Komponenten, wie hydrostatische und hydrodynamische Strömungsmaschinen, insbesondere durch Pumpen, Kompressoren oder Verdichter, deren Einsatzzweck die Fluidförderung ist, sowie Ventile Druckänderungen in das fluiddynamische System eingebracht werden, die sich als Druckfluktuationen bzw. Druckpulsationen mit Schallgeschwindigkeit wellenförmig im fluiddynamischen System ausbreiten und an Orten mit einer sprunghaften Änderung der akustischen Impedanz, beispielsweise Wände, Ventile oder Schalldämpfer, reflektiert bzw. absorbiert und transmittiert werden.

Beim Betrieb eines solchen fluiddynamischen Systems wird je nach Aufgabe ein definierter Druck oder Volumenstrom an definierten Stellen bzw. Verbrauchern benötigt. In der Anlage liegt somit stets ein definierter Bedarf vor, welcher durch die Strömungs- oder Verdrängermaschine, beispielsweise eine Pumpe, erfüllt werden muss. Im Optimalfall liefert die Strömungs- oder Verdrängermaschine nur genau den erforderlichen Bedarf der Anlage und arbeitet somit energieeffizient im optimalen Betriebspunkt für den jeweiligen Systemzustand des gesamten fluiddynamischen Systems.

Im Regelfall sind diese Systemzustände unbekannt, insbesondere bei komplexeren Anlagen, und unterliegen zeitlichen Veränderung aufgrund von beispielsweise geänderten Ventilstellungen oder Änderungen in hydraulischen Stellern, oder aber auch aufgrund von Verschleiß im System. Dementsprechend sind auch die jeweils aktuellen Anforderungen an die Strömungs- oder Verdrängermaschine, insbesondere eine Pumpe, d.h. der Anlagenbedarf, in der Regel nicht bekannt. Daher wird die Strömungs- oder Verdrängermaschine stets so betrieben, so dass die Anforderungen in jedem Fall erfüllt werden. Aufgrund dessen wird beim Betrieb der Strömungs- oder Verdrängermaschine stets mehr Energie aufgewendet als eigentlich erforderlich wäre, was energetisch ungünstig ist.

Aus BÜKER JOHANNES ET AL: "Active noise cancellation applied to a centrifugal pump in a closed loop piping system", APPLIED ACOUSTICS, ELSEVIER PUBLISHING, GB, Bd. 178, 2021-03-02, ISSN; 0003-682X ist ein hydrodynamischer Aktuator zur aktiven und adaptiven Reduktion von dynamischen Druckpulsen bekannt.

JP H05 332491 A offenbart einen aktiven Akkumulator, der Druckpulsationen in einer Leitung mit fließender Flüssigkeit reduziert.

Ein aktiver Dämpfer zur Unterdrückung dominanter harmonischer Druckfluktuationen in einer Flüssigkeitsleitung ist aus PAN M ET AL: "Hybrid Fluid-borne Noise Control in Fluid-filled Pipelines", JOURNAL OF PHYSICS. CONFERENCE SERIES; Bd. 744, 2016-09-01, Seite 012016, GB, ISSN: 1742-6588 bekannt.

Es ist daher Aufgabe der vorliegenden Erfindung, eine Mess- und/oder Regelungsvorrichtung für ein fluiddynamisches System, ein fluiddynamisches System und ein Verfahren zum Betrieb einer Mess- und/oder Regelvorrichtung für ein fluiddynamisches System anzugeben, welche die oben genannten Nachteile überkommen.

Die Erfindung löst diese Aufgabe mit den Merkmalen der unabhängigen Ansprüche. Weitere bevorzugte Ausführungsformen der Erfindung sind den Unteransprüchen und den zugehörigen Beschreibungen und Zeichnungen zu entnehmen.

Gemäß dem Grundgedanken der Anmeldung wird eine Mess- und/oder Regelungsvorrichtung für ein fluiddynamisches System vorgeschlagen, wobei das fluiddynamische System eine Strömungs- oder Verdrängermaschine, Leitungen und zumindest eine weitere fluiddynamische Komponente umfasst. Die Mess- und/oder Regelungsvorrichtung umfasst mindestens einen ersten Drucksensor, einen Druckfluktuationsgenerator zur aktiven Reduktion von Druckfluktuationen in dem fluiddynamischen System und eine erste Reglereinheit mit einem adaptiven Filter mit einer Mehrzahl von Filterkoeffizienten. Die erste Reglereinheit ist dazu eingerichtet, ein Druckfluktuationssignal von dem ersten Drucksensor zu empfangen, ein Referenzsignal zu empfangen oder zu erzeugen, und aus dem Referenzsignal mittels des adaptiven Filters ein Steuersignal zu erzeugen, den Druckfluktuationsgenerator mit dem Steuersignal zu steuern, und den adaptiven Filter kontinuierlich zu optimieren oder anzupassen, um das Druckfluktuationssignal zu minimieren. Es wird vorgeschlagen, dass das Mess- und/oder Regelungssystem eine zweite Regeleinheit umfasst, welche dazu eingerichtet ist, die Filterkoeffizienten des adaptiven Filters der ersten Reglereinheit, vorzugsweise kontinuierlich, auszuwerten, und
- aus Änderungen der Filterkoeffizienten im Zeitverlauf Veränderungen im fluiddynamischen System zu identifizieren; und/oder
- aus den Filterkoeffizienten eine Zuordnung zu bekannten Systemzuständen der Strömungs- oder Verdrängermaschine und/oder des fluiddynamischen Systems und/oder Teilen des fluiddynamischen Systems vorzunehmen; und/oder
- die Leistung und/oder Drehzahl der Strömungs- oder Verdrängermaschine des fluiddynamischen Systems mittels der Auswertung der Filterkoeffizienten auf einen effizienten, insbesondere optimalen, Betriebspunkt der Strömungs- oder Verdrängermaschine im fluiddynamischen System zu regeln.

Demnach ist die Mess- und/oder Regelungsvorrichtung zunächst für eine Kompensation der Druckfluktuationen im fluiddynamischen System eingerichtet.

Die Strömungs- oder Verdrängermaschine ist eine Hauptquelle der Druckfluktuationen im fluiddynamischen System, die sich als dynamische Änderungen bzw. Pulse im zeitlichen Verlauf des Drucks bemerkbar machen. Die Druckfluktuationen bzw. Druckschwingungen stellen ungewollte Verluste und Anregungen von Vibrationen des Rohrleitungssystems dar. Die Strömungs- oder Verdrängermaschine ist beispielsweise eine fluiddynamische Pumpe. Eine Strömungsmaschine kann eine fluiddynamische Pumpe, beispielsweise Seitenkanal-, Radial- und Axialpumpen, insbesondere Umwälzpumpen, sein. Weiterhin kann eine Strömungsmaschine beispielsweise ein Verdichter oder Kompressor sein. Eine Verdrängermaschine kann insbesondere eine Kolbenmaschine sein, welche vorzugsweise eine Taktfrequenz aufweist, welcher mit einer Drehzahl einer Welle der Kolbenmaschine korrespondiert. Die Verdrängermaschine ist vorzugsweise eine drehzahlgetriebene und/oder drehzahlgesteuerte Verdrängermaschine.

Die Druckfluktuationen werden vorzugsweise stromabwärts der Strömungs- oder Verdrängermaschine mittels des ersten Drucksensors gemessen und in ein Druckfluktuationssignal umgewandelt, welches von der ersten Reglereinheit empfangen wird. Das Druckfluktuationssignal ist zeitlich variabel entsprechend der vorliegenden Druckfluktuationen, welche insbesondere in den Leitungen des fluiddynamischen Systems auftreten. Der erste Drucksensor ist vorzugsweise stromabwärts der Strömungs- oder Verdrängermaschine und des Druckfluktuationsgenerators angeordnet.

Der Drucksensor ist dazu eingerichtet den entsprechenden Druck, insbesondere den akustischen Druck, zu messen. Die Messung des Drucks durch den Drucksensor kann mittels unterschiedlicher Messverfahren erfolgen, beispielsweise auch über Dehnmessstreifen und/oder Beschleunigungssensoren. Der Drucksensor ist vorzugsweise eine Form von Wandler von akustisch zu einem elektrischen Signal.

Die Druckfluktuationen weisen eine Dynamik im Druck über der Zeit auf, die auf dem statischen Druck im fluiddynamischen System aufsetzen. Unter statischem Druck kann daher auch ein mittlerer oder gemittelter Druck verstanden werden, um den die Druckfluktuationen schwanken.

Das Referenzsignal wird von der ersten Reglereinheit empfangen oder vorzugsweise von der Reglereinheit erzeugt und weist vorzugsweise mindestens eine Sinusschwingung auf. Die Amplitude der Sinusschwingung im Referenzsignal nimmt vorzugsweise einen voreingestellten Wert an. Das Referenzsignal kann weitere Sinusschwingungen aufweisen, deren Frequenzen vorzugsweise wiederum einem ganzzahligen Vielfachen der ersten Frequenz entsprechen. Die weiteren Sinusschwingungen weisen vorzugsweise eine geringere, voreingestellte Amplitude als die erste Sinusschwingung auf. Das von der ersten Reglereinheit empfangene oder vorzugsweise erzeugte Referenzsignal kann in alternativen Ausführungsformen keine Sinusschwingung aufweisen, insbesondere im Fall eines breitbandigen Referenzsignals.

Das vorliegende Referenzsignal wird mittels eines adaptiven Filters, insbesondere eines digitalen Filters, in der ersten Reglereinheit gefiltert. Bevorzugt wird ein Filter mit endlicher Impulsantwort (FIR-Filter) oder ein Filter mit unendlicher Impulsantwort (IIR Filter) oder eine Kombination dieser beiden Filter genutzt, welcher dann entsprechend in der ersten Reglereinheit implementiert ist. Der Filter weist entsprechende Filterparameter auf, welche Amplituden, Phasenlage und/oder Frequenzen des Referenzsignals verändern können. Das Referenzsignal wird nach dem Passieren des Filters als Steuersignal bezeichnet, welches durch die erste Reglereinheit erzeugt wird. Der vorgesehene Filter, insbesondere der FIR-Filter, ist adaptiv, so dass das Filterverhalten im Betrieb, insbesondere durch Anpassung der Filterparameter, veränderbar ist.

Der Druckfluktuationsgenerator wird mit dem Steuersignal, welches in vorteilhaften Ausführungsformen zusätzlich verstärkt wird, angesteuert und betrieben.

Der Effekt der Interferenz von den Druckfluktuationen des fluiddynamischen Systems bzw. der Strömungs- oder Verdrängermaschine mit den Druckfluktuationen des Druckfluktuationsgenerators ist mit dem ersten Drucksensor stromabwärts der Strömungs- oder Verdrängermaschine messbar, welcher die Druckfluktuationen erfasst und ein entsprechendes Druckfluktuationssignal erzeugt, welches wiederum an die erste Reglereinheit übertragen wird.

Dementsprechend stellt sich nach einer Optimierungsphase der adaptive Filter, insbesondere durch Anpassung bzw. Optimierung der Filterparameter, so ein, dass das Referenzsignal derart angepasst bzw. verändert wird, dass sich eine möglichst destruktive Interferenz der Druckfluktuationen einstellt. Hierdurch werden die Druckfluktuationen im fluiddynamischen System verringert, was zu geringerer akustischer Emission und zu einem geringeren Widerstand im fluiddynamischen System führt. Durch den kontinuierlichen Optimierungsvorgang erfolgt eine automatische Anpassung an Veränderungen des fluiddynamischen Systems, beispielsweise durch Öffnen oder Schließen einzelner Ventile im fluiddynamischen System.

Gemäß dem Vorschlag zur Lösung der Aufgabe werden die Filterkoeffizienten des adaptiven Filters der ersten Reglereinheit kontinuierlich durch die zweite Regeleinheit ausgewertet. Die Auswertung der für die aktive Reduktion der Druckfluktuationen verwendeten Filterkoeffizienten erlaubt die Systemzustände, insbesondere der Strömungs- oder Verdrängermaschine, zu erkennen. Dies ist vor allem bei fluiddynamischen Systemen vorteilhaft, die aufgrund ihrer Art, Größe und/oder Komplexität nicht vermessen werden können und/oder die ständigen Änderungen unterworfen sind.

Die Kompensation der Druckfluktuationen ermöglicht es im regulären Betrieb des fluiddynamischen Systems, die entsprechenden Filterkoeffizienten, welche das System und den Systemzustand beschreiben, aufzunehmen, und gleichzeitig die Druckfluktuationen im fluiddynamischen System und die Schallemissionen des fluiddynamischen Systems zu reduzieren.

Die Erfindung hat erkannt, dass die Kompensation der Druckfluktuationen, welches auch als active noise canceling verstanden werden kann, die Erfassung und Beschreibung des Systemzustands eines fluiddynamischen Systems ermöglicht, wobei die entsprechenden Werte unmittelbar aus den Filterkoeffizienten des adaptiven Filters entnommen werden. Daher können fluiddynamische Systeme, die üblichen Methoden zur Systemidentifikation nicht zugänglich sind, identifiziert und insbesondere kontinuierlich im regulären Betrieb identifiziert und ausgewertet werden. Ferner ist hierdurch bei der Auswertung eine akustische Entkopplung der Strömungs- oder Verdrängermaschine von der Anlage bzw. vom restlichen Teil des fluiddynamischen Systems möglich, so dass die ausgesandten Druckpulsationen der Strömungs- oder Verdrängermaschine nicht in der Anlage bzw. den weiteren Teilen des fluiddynamischen Systems reflektiert werden und wieder auf die Strömungs- oder Verdrängermaschine einwirken können. Mit anderen Worten wird die Strömungs- oder Verdrängermaschine aus Sicht der weiteren Teile des Systems stumm geschaltet.

Die Filterkoeffizienten bilden das akustische Verhalten des fluiddynamischen Systems ab, so dass auch Änderungen des akustischen Verhaltens fernab des ersten Drucksensors erfasst werden können.

Aus der Auswertung der Filterkoeffizienten in der zweiten Regeleinheit können vorzugsweise aus den Änderungen der Filterkoeffizienten im Zeitverlauf Veränderungen im fluiddynamischen System identifiziert werden. Dies ermöglicht Rückschlüsse auf Veränderungen beispielsweise im Strömungs- oder Verdrängermaschinensystem, insbesondere im Pumpensystem. Vorzugsweise erfolgt ein Aufteilen des auszulöschenden Frequenzbandes auf mehrere adaptive Filterkanäle, so dass Frequenzanteile geringer Amplitude in den ausgelöschten Druckschwingungen gezielt unterschieden und fein aufgelöst werden können. Die Filterkoeffizienten korrespondieren in ihrer Amplitude und Abfolge in der Regel mit den ausgelöschten Schwingungsanteilen.

Eine Änderung des Systemzustands oder der Systemeigenschaften hat eine Veränderung des Schallfeldes und dem der Filterkoeffizienten zur Folge, da die Filterkoeffizienten durch die kontinuierliche Optimierung des adaptiven Filters bei einer Veränderung des Schallfeldes angepasst werden. Die veränderte Gewichtung der Filterkoeffizienten bzw. des Satzes der Filterkoeffizienten ermöglichen so Rückschlüsse auf Veränderungen im System. Das fluiddynamische System kann daher im Betrieb kontinuierlich überwacht und die Systemzustände identifiziert (condition monitoring) werden.

Alternativ oder ergänzend kann vorzugsweise aus der Auswertung der Filterkoeffizienten in der zweiten Regeleinheit aus den Filterkoeffizienten eine Zuordnung zu bekannten Systemzuständen der Strömungs- oder Verdrängermaschine und/oder des fluiddynamischen Systems und/oder Teilen des fluiddynamischen Systems vorgenommen werden. Ein bestimmter Systemzustand, insbesondere ein statischer Systemzustand, resultiert bei der kontinuierlichen Optimierung des adaptiven Filters in einem charakteristischen Satz von Filterkoeffizienten, z.B. Filtergewichte und -parametern.

Die Zuordnung kann beispielsweise durch Vergleich der Filterkoeffizienten mit einem oder mehreren Sätzen Filterkoeffizienten eines bekannten Systemzustands erfolgen. Hiermit kann beispielsweise eine effektive Überwachung und Vermessung (condition monitoring) des fluiddynamischen Systems und insbesondere der Strömungs- oder Verdrängermaschine, beispielsweise eine Pumpe, erfolgen.

In vorteilhaften Ausführungsformen weist die zweite Regeleinheit ein neuronales Netzwerk auf, welches anhand bekannter Zustände, Eigenschaften und/oder Ereignisse des fluiddynamischen Systems, insbesondere der Strömungs- oder Verdrängermaschine, so trainiert wird, dass nach dem Trainingsprozess die Trainingsdaten korrekt den entsprechenden Zuständen, Eigenschaften und/oder Ereignissen zugeordnet werden können.

Beispielsweise können im Training Knoten und Gewichte des neuronalen Netzwerks mit einem Lern-Algorithmus basierend auf dem Erkennungsfehler iterativ angepasst werden. Der Erkennungsfehler entsteht zwischen dem zu erkennenden fluiddynamischen System bzw. dessen Systemzustand, insbesondere der Strömungs- oder Verdrängermaschine, und dem vom neuronalen Netzwerk erkannten System oder Systemzustand. Die Datenpunkte der Trainingsdaten können beispielsweise entsprechend der Menge je Datensatz und der systembedingten qualitativen Zusammensetzung einzeln oder in Gruppen den Knoten des neuronalen Netzwerks zugeordnet werden. Durch korrektes Erkennen und Zuordnen zu bekannten Systemzuständen, -eigenschaften und -ereignissen können diese im Betrieb des fluiddynamischen Systems von unbekannten Systemzuständen, -eigenschaften und -ereignissen unterschieden werden. Auf diese Weise können beispielsweise normale Systemzustände von abnormalen Systemzuständen, insbesondere der Strömungs- oder Verdrängermaschine, unterschieden werden, so dass unter anderem Verschleiß oder Schäden der Strömungs- oder Verdrängermaschine frühzeitig erkannt werden können. Hierdurch können insbesondere Wartungsarbeiten und Reparaturen am fluiddynamischen System rechtzeitig und effizient geplant werden, was eine vorausschauende Instandhaltung (predictive maintenance) ermöglicht.

Alternativ oder ergänzend regelt die Mess- und/oder Regelungsvorrichtung vorzugsweise die Leistung und/oder Drehzahl der Strömungs- oder Verdrängermaschine des fluiddynamischen Systems mittels der Auswertung der Filterkoeffizienten auf einen effizienten Betriebspunkt, vorzugsweise auf den Bestpunkt, der Strömungs- oder Verdrängermaschine im fluiddynamischen System. Die Erfindung hat erkannt, dass eine entsprechende Strömungs- oder Verdrängermaschine in einem fluiddynamischen System bei Betrieb im Bestpunkt (Best Efficiency Point, BEP), d.h. in einem Betriebspunkt mit höchster Effizienz, ein charakteristisches akustisches Verhalten aufweist, welches durch die Mess- und/oder Regelungsvorrichtung mittels der Filterkoeffizienten des adaptiven Filters erfasst werden kann. Der entsprechende Satz Filterkoeffizienten kann daher mit einem entsprechenden Betriebspunkt verglichen werden. Vereinfacht gesagt, kann ein bestimmter Klang bzw. ein bestimmter Satz Filterkoeffizienten einem bestimmten Betriebspunkt der Strömungs- oder Verdrängermaschine zugeordnet werden. Die Auswertung der Filterkoeffizienten auf einen effizienten Betriebspunkt, vorzugsweise BEP, einer Strömungs- oder Verdrängermaschine eines fluiddynamischen Systems ist durch die Mess- und/oder Regelungsvorrichtung auch bei dynamischen Kennfeldern in fluiddynamischen Systemen bei einer Wechselwirkung von Strömungs- oder Verdrängermaschine mit dem restlichen fluiddynamischen System möglich.

Zur Regelung der Strömungs- oder Verdrängermaschine kann in Abhängigkeit des identifizierten Systemzustands eine für die Strömungs- oder Verdrängermaschine optimale Drehzahl bestimmt und beispielsweise als Soll-Drehzahl ausgegeben werden.

Eine derartige Auswertung des akustischen Verhaltens der Strömungs- oder Verdrängermaschine ist durch die aktive Kompensation der Druckfluktuationen des gesamten fluiddynamischen Systems möglich, insbesondere für komplexe, zeitlich variable und unbekannte Systeme, wobei die Auswertung unmittelbar durch die Filterkoeffizienten, welche für die aktive Kompensation verwendet werden, erreicht wird.

Die vorgeschlagene Mess- und/oder Regelungsvorrichtung ermöglicht eine bedarfsgerechte Regelung von Strömungs- oder Verdrängermaschinen in fluiddynamischen Systemen, so dass die Strömungs- oder Verdrängermaschine stets energieeffizient betrieben werden kann, auch wenn der aktuelle Bedarf der Anlage an sich nicht bekannt ist. Auf diese Weise können in einem fluiddynamischen System erhebliche Mengen Energie und somit Kosten eingespart werden. Weiterhin kann beispielsweise die Lebensdauer der Strömungs- oder Verdrängermaschine oder deren Wartungsintervalle verlängert werden, da die Strömungs- oder Verdrängermaschine bedarfsgerecht betrieben werden kann. Ein Betrieb der Strömungs- oder Verdrängermaschine über dem eigentlichen Bedarf, um die Bedarfsanforderungen stets zu erfüllen, kann hierdurch vermieden werden. Beispielsweise kann in Abhängigkeit des erkannten Systemzustands eine für die Strömungs- oder Verdrängermaschine optimale Drehzahl bestimmt und ausgegeben werden.

Es wird ferner vorgeschlagen, dass die zweite Regeleinheit dazu eingerichtet ist, die Filterkoeffizienten auf ein charakteristisches akustisches Verhalten der Strömungs- oder Verdrängermaschine auszuwerten. Diese Auswertung auf ein charakteristisches akustisches Verhalten der Strömungs- oder Verdrängermaschine ist nur durch die Kompensation der Druckfluktuationen möglich, da sie akustisch von den weiteren Teilen des Systems bzw. der Anlage entkoppelt wird. Die akustische Entkopplung ist hier elementar, da anderenfalls der Strömungs- oder Verdrängermaschinenschall im System reflektiert und in der Strömungs- oder Verdrängermaschine bzw. der Messung überlagert würde. Dies führt üblicherweise dazu, dass Messsignale einer Strömungs- oder Verdrängermaschinenakustik nur mit geringer Signalqualität aufgenommen werden können. Erst durch die akustische Entkopplung werden die Messsignale für die Auswertung und/oder Systemidentifikation und/oder Regelung in guter Qualität nutzbar. Durch eine entsprechende Auswertung kann erkannt werden, ob die Strömungs- oder Verdrängermaschine auf einem effizienten Betriebspunkt, insbesondere auf dem Bestpunkt (BEP), läuft bzw. zu diesem geregelt werden. Ein Betrieb der Strömungs- oder Verdrängermaschine oberhalb des Bedarfs des fluiddynamischen Systems kann auf diese Weise vermieden werden, was die Energieeffizienz deutlich erhöht.

Gemäß einer Weiterentwicklung wird vorgeschlagen, dass die zweite Reglereinheit ein neuronales Netz umfasst, welches zur Erkennung von charakteristischem akustischem Verhalten einer Strömungs- oder Verdrängermaschine aus den Filterkoeffizienten trainiert ist. Mittels eines neuronalen Netzes kann in den abstrakten Sätzen von Filterkoeffizienten charakteristisches akustisches Verhalten erkannt werden.

Gemäß einer weiteren Weiterentwicklung wird vorgeschlagen, dass die zweite Regeleinheit dazu eingerichtet ist, einen charakteristischen Systemzustand der Strömungs- oder Verdrängermaschine aus der Auswertung der Filterkoeffizienten zu identifizieren. Das bestimmte charakteristische Verhalten kann beispielsweise dem Verhalten bei Betrieb im Bestpunkt der Strömungs- oder Verdrängermaschine entsprechen.

Ferner wird vorgeschlagen, dass die zweite Regeleinheit dazu eingerichtet ist, einen charakteristischen Systemzustand zumindest einer weiteren fluiddynamische Komponente, beispielsweise Kessel, Becken oder Armaturen, vorzugsweise die Anlage des fluiddynamischen Systems, aus der Auswertung der Filterkoeffizienten zu identifizieren. Dies wird durch die akustische Entkopplung von der Strömungs- oder Verdrängermaschine ermöglicht, so dass die Systemzustände weiterer Komponenten identifiziert werden können, was beispielsweise zu deren Zustands-überwachung und Wartungsplanung eingesetzt werden kann.

Es wird ferner vorgeschlagen, dass die zweite Regeleinheit dazu eingerichtet ist, die Strömungs- oder Verdrängermaschine auf ein bestimmtes charakteristisches akustisches Verhalten zu regeln. In vorteilhaften Ausführungsformen kann die Drehzahl bzw. die Solldrehzahl der Strömungs- oder Verdrängermaschine dementsprechend gesteuert und/oder geregelt werden, so dass ein bestimmter Systemzustand, beispielsweise Betrieb der Strömungs- oder Verdrängermaschine im Bestpunkt, eingenommen wird.

Gemäß einer Weiterentwicklung wird vorgeschlagen, dass die zweite Regeleinheit dazu eingerichtet ist, die Filterkoeffizienten zu speichern. Das Speichern kann hierbei kontinuierlich oder in Intervallen erfolgen. Auf diese Weise können beispielsweise die Filterkoeffizienten zu unterschiedlichen Zeitpunkten verglichen werden, wodurch auch schleichende Veränderungen im fluiddynamischen System erkannt und ausgewertet werden können.

In einer bevorzugten Ausführungsform ist die Ist-Drehzahl der Strömungs- oder Verdrängermaschine erfassbar und von der ersten Reglereinheit empfangbar, wobei die erste Reglereinheit dazu eingerichtet ist, aus der Ist-Drehzahl der Strömungs- oder Verdrängermaschine das Referenzsignal zu erzeugen.

Das Referenzsignal wird somit in Abhängigkeit von der erfassten Drehzahl der Strömungs- oder Verdrängermaschine generiert und unterliegt somit den gleichen zeitlichen Veränderungen wie die Drehzahl der Strömungs- oder Verdrängermaschine.

Die Drehzahl der Strömungs- oder Verdrängermaschine kann beispielsweise mittels eines Drehzahlsensors erfassbar sein. Weiterhin kann die Drehzahl bei elektrisch angetriebenen Strömungs- oder Verdrängermaschine unter Umständen direkt aus der elektrischen Ansteuerung der Strömungs- oder Verdrängermaschine erfasst werden, so dass die Drehzahl der Strömungs- oder Verdrängermaschine als variable Messgröße von der Reglereinheit empfangen werden kann.

Neben dieser variablen Messgröße liegt in bevorzugten Ausführungsformen eine konstante Größe der Strömungs- oder Verdrängermaschine, insbesondere die Anzahl der Laufradschaufeln bzw. der Rotorblätter und/oder der Leitradschaufeln, auf der Reglereinheit vor.

Ferner kann eine Änderung der Drehzahl der Strömungs- oder Verdrängermaschine durch die direkte Berücksichtigung im Referenzsignal unmittelbar erfolgen, ohne dass die Optimierungsphase an das geänderte System durch die veränderte Drehzahl abgewartet werden muss. Daher ergibt sich durch die Veränderung der Drehzahl der Strömungs- oder Verdrängermaschine nicht zwangsläufig eine signifikante Anpassung der Filterparameter, so dass die Optimierungsphase bis zum Erreichen eines Optimums deutlich verkürzt wird. Durch die kontinuierliche Optimierung erfolgt bei einer Veränderung der Drehzahl der Strömungs- oder Verdrängermaschine und somit einer Veränderung des Referenzsignals eine Anpassung zum einen durch das veränderte Referenzsignal und zum anderen durch die kontinuierliche Optimierung bzw. Adaption des Filters.

Die Druckfluktuationen, die von einer Strömungs- oder Verdrängermaschine, insbesondere einer Pumpe, erzeugt werden, entsprechen bei einer einstufigen Strömungs- oder Verdrängermaschine, in der Regel näherungsweise einem ganzzahligen Vielfachen der Drehzahl der Strömungs- oder Verdrängermaschine, wobei die Frequenz bzw. Frequenzen dieser Druckfluktuationen abhängig von der Drehzahl und der Art der Strömungs- oder Verdrängermaschine sind.

In einer alternativen Ausführungsform umfasst die Mess- und/oder Regelungsvorrichtung mindestens einen zweiten Drucksensor, und die erste Reglereinheit ist dazu eingerichtet, ein zweites Druckfluktuationssignal als Referenzsignal von dem zweiten Drucksensor zu empfangen. Die vom zweiten Drucksensor zu erfassenden Druckfluktuationen werden vorzugsweise zwischen der Strömungs- oder Verdrängermaschine und dem Druckfluktuationsgenerator gemessen, so dass diese in der Mess- und/oder Regelungsvorrichtung als Referenzsignal genutzt werden können.

Diese Ausführungsform ist insbesondere für breitbandige akustische Anregungen eines fluiddynamischen Systems geeignet.

In der Mess- und/oder Regelungsvorrichtung können mehrere erste Drucksensoren vorgesehen sein. Weiterhin können in der Mess- und/oder Regelungsvorrichtung mehrere zweite Drucksensoren vorgesehen sein. Der zweite Drucksensor kann prinzipiell baugleich zu dem ersten Drucksensor ausgeführt werden.

Vorzugsweise wird Druckfluktuationsgenerator mit dem Steuersignal, welches in vorteilhaften Ausführungsformen zusätzlich verstärkt wird, angesteuert und betrieben. Der Druckfluktuationsgenerator erzeugt longitudinale Druckwellen durch die Verwendung einer oszillierenden Quellfläche des Oszillators. Der Druckfluktuationsgenerator kann beispielsweise ein fluidstatischer Aktuator sein. Die Druckwellen bzw. Druckfluktuationen verlaufen vorzugsweise zunächst in Längsrichtung eines Anschlussrohres des fluiddynamischen Systems, in dem der Druckfluktuationsgenerator positioniert ist, bevor diese mit den weiteren Druckfluktuationen im System interferieren. Die Quellfläche ist vorzugsweise planar. Die Quellfläche kann jedoch auch in nicht planarer Weise ausgeführt werden.

Das Anschlussrohr, in dem der Druckfluktuationsgenerator vorzugsweise angeordnet ist, ist in vorteilhaften Ausführungsformen über ein Verbindungsstück mit dem fluiddynamischen System verbunden. Die geometrische Gestaltung des Verbindungsstücks kann anwendungsbedingt variieren. Das Verbindungsstück kann beispielsweise als winkliges T- oder Y-Stück bzw. bogenförmiges Stück ausgeführt sein. Der Querschnitt des Anschlussrohres kann ebenfalls anwendungsbedingt variieren. Vorzugsweise werden im Verbindungsstück die Druckfluktuationen im fluiddynamischen System, insbesondere von der Strömungs- oder Verdrängermaschine, mit den Druckfluktuationen des Druckfluktuationsgenerators überlagert, wobei die Druckfluktuationen im fluiddynamischen System durch destruktive Interferenz minimiert werden können.

Weiterhin wird zur Lösung der Aufgabe ein fluiddynamisches System vorgeschlagen, welches eine Strömungs- oder Verdrängermaschine, Leitungen und zumindest eine weitere fluiddynamische Komponente umfasst, wobei das fluiddynamische System eine Mess- und/oder Regelungsvorrichtung nach einem der Ansprüche 1 bis 9 umfasst.

Ein entsprechendes fluiddynamisches System kann besonders energieeffizient und mit geringen unplanmäßigen Ausfallzeiten betrieben werden.

Gemäß einer Weiterentwicklung wird vorgeschlagen, dass der Druckfluktuationsgenerator stromabwärts der Strömungs- oder Verdrängermaschine und der erste Drucksensor stromabwärts des Druckfluktuationsgenerator im fluiddynamischen System angeordnet ist. Durch diese Anordnung kann die aktive Reduktion der Druckfluktuationen durch den Druckfluktuationsgenerator mittels des ersten Drucksensors erfasst werden, so dass der adaptive Filter entsprechend kontinuierlich optimiert werden kann.

Es wird ferner vorgeschlagen, dass der zweite Drucksensor stromabwärts der Strömungs- oder Verdrängermaschine und stromaufwärts des Druckfluktuationsgenerators angeordnet ist. Dies ermöglicht das Erfassen der Druckfluktuationen, welche von der Strömungs- oder Verdrängermaschine erzeugt werden, bevor diese mit den Druckfluktuationen des Druckfluktuationsgenerators interagieren, so dass auf diese Weise eine Referenzsignal erzeugt werden kann.

Ferner wird zur Lösung der Aufgabe ein Verfahren zum Betrieb einer Mess- und/oder Regelungseinrichtung nach einem der Ansprüche 1 bis 9 für ein fluiddynamisches System mit den folgenden Schritten vorgeschlagen:
- Empfangen eines Druckfluktuationssignals von dem ersten Drucksensor,
- Empfangen oder Erzeugen eines Referenzsignals,
- Erzeugen eines Steuersignals aus dem Referenzsignal mittels des adaptiven Filters,
- Steuern des Druckfluktuationsgenerators mit dem Steuersignal,
- kontinuierliches Optimieren oder Anpassen des adaptiven Filters, um das Druckfluktuationssignal zu minimieren,
- Auswerten der Filterkoeffizienten des adaptiven Filters der ersten Reglereinheit, und
- Identifizieren von Veränderungen im fluiddynamischen System aus Änderungen der Filterkoeffizienten im Zeitverlauf; und/oder
- Zuordnen zu bekannten Systemzuständen der Strömungs- oder Verdrängermaschine und/oder des fluiddynamischen Systems und/oder Teilen des fluiddynamischen Systems aus den Filterkoeffizienten; und/oder
- Regeln der Leistung und/oder Drehzahl der Strömungs- oder Verdrängermaschine des fluiddynamischen Systems mittels der Auswertung der Filterkoeffizienten auf einen effizienten, insbesondere optimalen, Betriebspunkt, vorzugsweise Bestpunkt, der Strömungs- oder Verdrängermaschine im fluiddynamischen System.

Die Erfindung wird im Folgenden anhand bevorzugter Ausführungsformen unter Bezugnahme auf die beigefügten Figuren erläutert. Dabei zeigt
- Fig. 1: ein fluiddynamisches System mit Mess- und/oder Regelungsvorrichtung; und
- Fig. 2: ein weiteres fluiddynamisches System mit Mess- und/oder Regelungsvorrichtung.

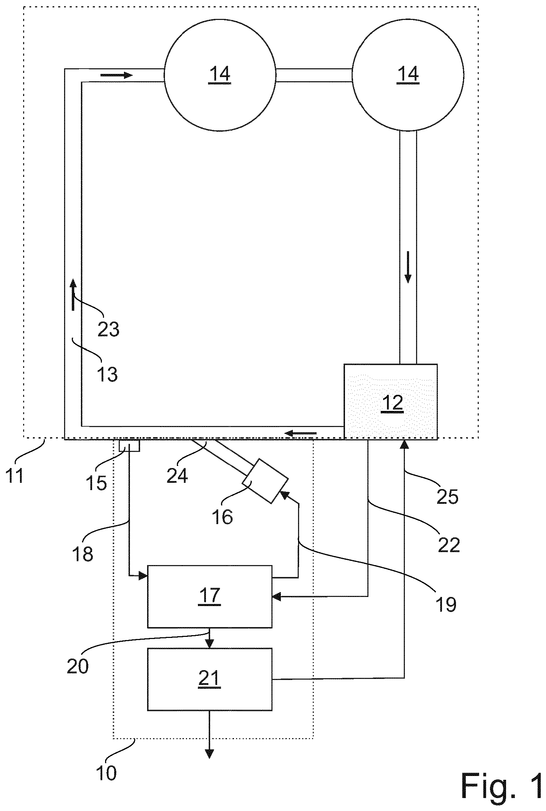

Figur 1 zeigt eine schematische Darstellung eines fluiddynamischen Systems 11 mit einer Mess- und/oder Regelungsvorrichtung 10. Fluiddynamische Systeme 11 können offen oder geschlossen sein, wobei in der schematischen Darstellung der Figur 1 ein geschlossenes fluiddynamisches System 11 mit einer Strömungs- oder Verdrängermaschine 12 in einem einfachen Kreislauf aus Leitungen 13 und zwei symbolischen weiteren fluiddynamischen Komponenten 14, beispielsweise Ventile, Thermostate, Wärmetauscher, Heizkörper, hydraulische Steller, in dem Kreislauf gezeigt ist.

Die Strömungs- oder Verdrängermaschine 12 bewirkt eine Erhöhung des statischen Drucks im fluiddynamischen System 11 sowie in Abhängigkeit von der fluiddynamischen Komponenten 14 einen Volumenstrom mit einer Strömungsrichtung 23. Bei dem fluiddynamischen System 11 kann es sich beispielsweise um den Heizkreislauf eines Wohnhauses handeln.

Druckfluktuationen werden insbesondere durch die Strömungs- oder Verdrängermaschine 12 in ein fluiddynamisches System 11 eingebracht, welche sich im fluiddynamischen System 11 ausbreiten und die Struktur, insbesondere die Leitungen 13, zu Schwingungen anregen. Dies kann unter anderem zu unerwünschten akustischen Emissionen führen.

Die Mess- und/oder Regelungsvorrichtung 10 weist einen Druckfluktuationsgenerator 16 zur aktiven Reduktion von Druckfluktuationen auf, welcher Druckfluktuation gezielt in das fluiddynamische System einbringt, um diese destruktiv mit den vorhandenen von der Strömungs- oder Verdrängermaschine 12 und/oder der fluiddynamischen Komponenten 14 erzeugten Druckfluktuationen zu interferieren.

Der Druckfluktuationsgenerator 16 ist daher hydraulisch bzw. fluiddynamisch mit dem fluiddynamischen System 11 verbunden, was im Ausführungsbeispiel der Figur 1 mittels eines winkligen T-Verbindungsstück 24 erfolgt.

Stromabwärts des Verbindungsstücks 24 ist an der Leitung 13 ein erster Drucksensor 15 angeordnet, welcher die Druckfluktuationen erfassen und somit den Druck in der Leitung 13 des fluiddynamischen Systems 11 entsprechend zeitlich auflösen kann. Die Druckfluktuationen werden von dem ersten Drucksensor 15 als Druckfluktuationssignal 18 an eine erste Reglereinheit 17 übertragen.

Die erste Reglereinheit 17 empfängt die Ist-Drehzahl 22 der Strömungs- oder Verdrängermaschine 12, welche mittels eines Drehzahlmessers erfasst wird. Die Strömungs- oder Verdrängermaschine 12 weist in diesem Ausführungsbeispiel eine Blattzahl sieben auf sowie eine angenommene Drehzahl von 1450 Umdrehungen pro Minute. Die Reglereinheit 17 erfasst die Drehzahl, multipliziert die Drehzahl mit der eingestellten Blattzahl und erzeugt hieraus ein sinusförmiges Referenzsignal mit 169,2 Hz, was der ersten Blattpassierfrequenz entspricht. Phasenlage und Amplitude des sinusförmigen Referenzsignals können in der Reglereinheit 17 voreingestellte Werte annehmen.

In diesem vorteilhaften Ausführungsbeispiel wird neben der ersten Blattpassierfrequenz auch die zweite und dritte Blattpassierfrequenz in dem Referenzsignal berücksichtigt. Demnach werden weitere Sinusschwingungen bei 338,4 Hz und 676,8 Hz in das Referenzsignal moduliert. Phasenlage und Amplitude des höheren Referenzsignals können in der Reglereinheit 17 voreingestellte Werte annehmen, wobei die Amplitude für die zweite und dritte Blattpassierfrequenz im Referenzsignal vorzugsweise geringer ist als Amplitude der ersten Blattpassierfrequenz.

In der ersten Reglereinheit 17 ist ein adaptiver Filter mit endlicher Impulsantwort (finite impulse response filter) implementiert, welcher das Referenzsignal filtert. Alternativ ist ein adaptiver Filter mit unendlicher Impulsantwort (infinite impulse response filter) oder weiterhin alternativ ein adaptiver Filter aus einer Kombination adaptiver Filter mit endlicher und unendlicher Impulsantwort implementiert. Das gefilterte Referenzsignal wird als Steuersignal 19 zu einem Druckfluktuationsgenerator 16 geleitet, welcher dementsprechend angesteuert wird.

Der Druckfluktuationsgenerator 16 erzeugt Druckfluktuationen bzw. Druckimpulse, welche sich entlang der Wandung der Leitung 13 ausbreiten und im Verbindungsstück 24 in Interferenz mit den Druckfluktuationen im fluiddynamischen System 11 treten, insbesondere mit den Druckfluktuationen, welche von der Strömungs- oder Verdrängermaschine 12 induziert werden.

Die resultierenden Druckfluktuationen werden wiederum von dem ersten Drucksensor 15 erfasst und an die Reglereinheit 17 als Druckfluktuationssignal 18 übertragen, so dass eine Rückkopplung über die Wirkung des Druckfluktuationsgenerator 16 erfolgt. In der Reglereinheit 17 wird ein kontinuierlicher Minimierungsprozess durchgeführt, welcher als Zielgröße das Druckfluktuationssignal 18 durch Variationen der Filterparameter des digitalen, adaptiven FIR-Filters in der Reglereinheit 17 minimiert. Folglich werden die Filterparameter nach Ablauf eines Zeitintervalls entsprechend des Minimierungsverfahrens, beispielsweise des mittleren quadratischen Fehlers (LMS), variiert und das Ergebnis als Druckfluktuationssignal 18 ausgewertet. Die kontinuierliche Optimierung des adaptiven Filters ermöglicht zudem eine Anpassung an die Veränderungen in dem fluiddynamischen System 11, in dem die Mess- und/oder Regelungsvorrichtung 10 eingesetzt ist. Die Veränderungen des Filterverhaltens des adaptiven Filters wird unter anderem zur Anpassung von Phase und Amplitude des vom Druckfluktuationsgenerator 16 erzeugten Gegendrucks bzw. erzeugten Druckfluktuationen eingesetzt. Das Filterverhalten des adaptiven Filters wird durch entsprechende Filterkoeffizienten 20 beschrieben, welche bei der kontinuierlichen Optimierung des adaptiven Filters zur Minimierung des Druckfluktuationssignals 18 das akustische Verhalten des fluiddynamischen Systems 11 beschreiben.

Änderungen in oder am fluiddynamischen System 11 wirken sich direkt auf das Betriebsverhalten der Strömungs- oder Verdrängermaschine 12 und somit auf die von ihr erzeugten Druckfluktuationen aus. Änderungen sind z.B. das Zu- und Abschalten von seriellen oder parallelen Leitungssträngen mit den fluiddynamischen Komponenten 14 (z.B. Heizkörper an oder aus) als auch deren gezielte Drosselung durch Anpassung der Ventilstellung. Infolge des sich ändernden Systemzustands des fluiddynamischen Systems 11 ist eine permanente Identifikation des Kreislaufs und Anpassung der Regelparameter in der Reglereinheit 17 für den Aktuator 16 besonders vorteilhaft, was durch den adaptiven Filter und den Optimierungsprozess erreicht wird.

Die Filterkoeffizienten 20 des adaptiven Filters, beispielsweise Parameter 1 bis n, werden von der ersten Regeleinheit 17 auf die zweite Reglereinheit 21 übertragen. In möglichen Ausführungsformen können die erste Regeleinheit 17 und die zweite Regeleinheit 21 auch innerhalb einer gemeinsamen elektronischen Verarbeitungseinheit angeordnet sein.

Die zweite Regeleinheit 21 wertet die Filterkoeffizienten 20 aus, wodurch der Systemzustand des fluiddynamischen Systems 11 identifiziert werden kann. Durch die Kompensation der Druckfluktuationen kann auch der charakteristische Systemzustand der Strömungs- oder Verdrängermaschine 12 separat mittels der Filterkoeffizienten 20 ausgewertet und identifiziert werden.

Ein Systemzustand, insbesondere ein statischer Systemzustand, führt zu einem charakteristischen Schallfeld am ersten Drucksensor 15 und resultiert bei Auslöschung in einem charakteristischen Satz von Filtergewichten und -parametern bzw. den Filterkoeffizienten 20. Die Filterkoeffizienten 20 korrespondieren mit den ausgelöschten Schwingungsanteilen im Schallfeld. Durch den adaptiven Filter in der ersten Regeleinheit 17 werden aufgrund seiner adaptiven Eigenschaft die Filterkoeffizienten 20 bzw. die Filtergewichte und -parameter bei einer Veränderung im Schallfeld des fluiddynamischen Systems 11 angepasst. Die veränderten Filterkoeffizienten 20 ermöglichen daher Rückschlüsse auf die Veränderungen im fluiddynamischen System 11.

In vorteilhaften Ausführungsformen wird mittels eines neuronalen Netzes in der zweiten Reglereinheit 21, welches mit bekannten Systemzuständen des fluiddynamischen Systems 11 oder auch der Strömungs- oder Verdrängermaschine 12 trainiert wurde, eine Zuordnung zu bekannten Systemzuständen der Strömungs- oder Verdrängermaschine 12 und/oder des fluiddynamischen Systems 11 vorgenommen. Durch das Erkennen bekannter Systemzustände, -eigenschaften und -ereignisse können diese im Betrieb des fluiddynamischen Systems 11 mit der Mess- und/oder Regeleinerichtung 10 von unbekannten Systemzuständen, - eigenschaften und -ereignissen unterschieden werden. Auf diese Weise können beispielsweise normale und abnormale Systemzustände unterschieden werden.

Weiterhin kann das Identifizieren der Systemzustände des hydrodynamischen Systems 11 und der Strömungs- oder Verdrängermaschine 12 genutzt werden, um die Betriebszustände der Strömungs- oder Verdrängermaschine 12 zu beschreiben. Das Betriebsverhalten der Strömungs- oder Verdrängermaschine 12 ergibt sich aus der Wechselwirkung mit dem weiteren hydrodynamischen System 11.

Eine Strömungs- oder Verdrängermaschine 12 bei Betrieb im Bestpunkt zeigt stets ein charakteristisches akustisches Verhalten. Beispielsweise nehmen in Kreiselpumpen breitbandige Geräusche mit zunehmendem Betrieb außerhalb des Bestpunktes zu, da es infolge der Fehlanströmung des Pumpenlaufrads zu zusätzlichen, ablösungsbedingten Mischungsverlusten kommt, welche sich als akustische Quellen manifestieren. Derartige Änderungen einer Strömungs- oder Verdrängermaschine 12 im charakteristischen akustischen Verhalten können aufgrund der Kompensation der Druckfluktuationen durch den Druckfluktuationsgenerator 16 überhaupt erst erfasst werden, welche sich dann direkt in den Filterkoeffizienten 20 des adaptiven Filters der ersten Reglereinheit widerspiegeln. Die geänderten Filterkoeffizienten 20 können mittels maschinellen Lernens oder auch mittels des neuronalen Netzes in der zweiten Reglereinheit 21 derart ausgewertet werden, dass in Abhängigkeit des erkannten Systemzustands der Strömungs- oder Verdrängermaschine 12 eine optimale Soll-Drehzahl 25 der Strömungs- oder Verdrängermaschine 12 bestimmt und ausgegeben werden kann. Hierdurch wird eine bedarfsgerechte Regelung der Strömungs- oder Verdrängermaschine 12 durch die zweite Regeleinheit 21 erreicht, wodurch erhebliche Einsparungen an Energie und Kosten bei Betrieb der Strömungs- oder Verdrängermaschine 12 erreicht werden können.

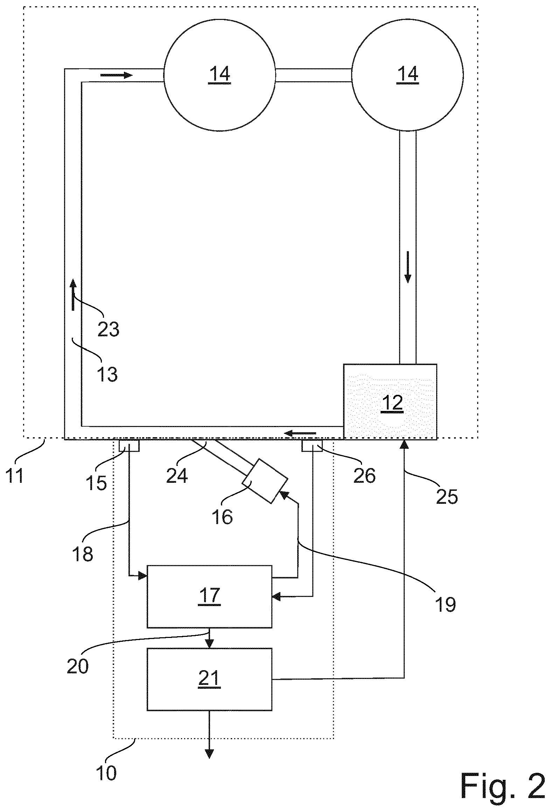

Figur 2 zeigt eine schematische Darstellung eines weiteren fluiddynamischen Systems 11 mit einer Mess- und/oder Regelungsvorrichtung 10. Abweichend vom Ausführungsbeispiel der Figur 1 weist die Mess- und/oder Regelungsvorrichtung 10 der Figur 2 einen zweiten Drucksensor 26 auf, welcher stromabwärts der Strömungs- oder Verdrängermaschine 12 und stromaufwärts des Druckfluktuationsgenerators 16 bzw. des winkligen T-Verbindungsstücks 24 angeordnet ist. Der zweite Drucksensor 26 erfasst insbesondere die Druckfluktuationen bevor diese mit den Druckfluktuationen des Druckfluktuationsgenerator 16 im Bereich des Verbindungsstücks 24 interferieren, womit die Druckfluktuationen aktiv reduziert werden. Die vom zweiten Drucksensor 26 aufgenommenen Druckfluktuationen werden in diesem Ausführungsbeispiel von der ersten Reglereinheit 17 empfangen und als Referenzsignal verarbeitet. Mittels des adaptiven Filters wird dementsprechend ein Steuersignal (19) für den Druckfluktuationsgenerator 16 erzeugt.

## Patentansprüche

1. Mess- und/oder Regelungsvorrichtung (10) für ein fluiddynamisches System (11), wobei das fluiddynamische System (11) eine Strömungs- oder Verdrängermaschine (12), Leitungen (13) und zumindest eine weitere fluiddynamische Komponente (14) umfasst, wobei die Mess- und/oder Regelungsvorrichtung (10)
- mindestens einen ersten Drucksensor (15),
- einen Druckfluktuationsgenerator (16) zur aktiven Reduktion von Druckfluktuationen in dem fluiddynamischen System (11)
- und eine erste Reglereinheit (17) mit einem adaptiven Filter mit einer Mehrzahl von Filterkoeffizienten (20) umfasst, wobei
- die erste Reglereinheit (17) dazu eingerichtet ist,
-- ein Druckfluktuationssignal (18) von dem ersten Drucksensor (15) zu empfangen,
-- ein Referenzsignal zu empfangen oder zu erzeugen, und
-- aus dem Referenzsignal mittels des adaptiven Filters ein Steuersignal (19) zu erzeugen,
-- den Druckfluktuationsgenerator (16) mit dem Steuersignal (19) zu steuern,
-- und den adaptiven Filter kontinuierlich zu optimieren, um das Druckfluktuationssignal (18) zu minimieren, **dadurch gekennzeichnet, dass**
- das Mess- und/oder Regelungssystem (10) eine zweite Regeleinheit (21) umfasst, welche dazu eingerichtet ist,
- die Filterkoeffizienten (20) des adaptiven Filters der ersten Reglereinheit (17) auszuwerten, und
-- aus Änderungen der Filterkoeffizienten (20) im Zeitverlauf Veränderungen im fluiddynamischen System (11) zu identifizieren; und/oder
-- aus den Filterkoeffizienten (20) eine Zuordnung zu bekannten Systemzuständen der Strömungs- oder Verdrängermaschine (12) und/oder des fluiddynamischen Systems (11) und/oder Teilen des fluiddynamischen Systems (11) vorzunehmen; und/oder
-- die Leistung und/oder Drehzahl der Strömungs- oder Verdrängermaschine (12) des fluiddynamischen Systems (11) mittels der Auswertung der Filterkoeffizienten (20) auf einen effizienten Betriebspunkt der Strömungs- oder Verdrängermaschine (12) im fluiddynamischen System (11) zu regeln.

2. Mess- und/oder Regelungsvorrichtung (10) nach Anspruch 1, **dadurch gekennzeichnet, dass** die zweite Regeleinheit (21) dazu eingerichtet ist,
- die Filterkoeffizienten (20) auf ein charakteristisches akustisches Verhalten der Strömungs- oder Verdrängermaschine (12) auszuwerten.

3. Mess- und/oder Regelungsvorrichtung (10) nach einem der vorangehenden Ansprüche, **dadurch gekennzeichnet, dass**
- die zweite Reglereinheit (21) ein neuronales Netz umfasst, welches zur Erkennung von charakteristischem akustischem Verhalten einer Strömungs- oder Verdrängermaschine (12) aus den Filterkoeffizienten (20) trainiert ist.

4. Mess- und/oder Regelungsvorrichtung (10) nach einem der vorangehenden Ansprüche, **dadurch gekennzeichnet, dass** die zweite Regeleinheit dazu eingerichtet ist,
- einen charakteristischen Systemzustand der Strömungs- oder Verdrängermaschine (12) aus der Auswertung der Filterkoeffizienten zu identifizieren.

5. Mess- und/oder Regelungsvorrichtung (10) nach einem der vorangehenden Ansprüche, **dadurch gekennzeichnet, dass** die zweite Regeleinheit dazu eingerichtet ist,
- einen charakteristischen Systemzustand zumindest einer weiteren fluiddynamische Komponente (14) aus der Auswertung der Filterkoeffizienten zu identifizieren.

6. Mess- und/oder Regelungsvorrichtung (10) nach einem der vorangehenden Ansprüche, **dadurch gekennzeichnet, dass** die zweite Regeleinheit (21) dazu eingerichtet ist,
- die Strömungs- oder Verdrängermaschine (12) auf ein bestimmtes charakteristisches akustisches Verhalten zu regeln.

7. Mess- und/oder Regelungsvorrichtung (10) nach einem der vorangehenden Ansprüche, **dadurch gekennzeichnet, dass** die zweite Regeleinheit (21) dazu eingerichtet ist, die Filterkoeffizienten (20) zu speichern.

8. Mess- und/oder Regelungsvorrichtung (10) nach einem der vorangehenden Ansprüche, **dadurch gekennzeichnet, dass**
- die Ist-Drehzahl (22) der Strömungs- oder Verdrängermaschine (12) erfassbar und von der ersten Reglereinheit (17) empfangbar ist, wobei die erste Reglereinheit (17) dazu eingerichtet ist, aus der Ist-Drehzahl (22) der Strömungs- oder Verdrängermaschine (12) das Referenzsignal zu erzeugen.

9. Mess- und/oder Regelungsvorrichtung (10) nach einem der Ansprüche 1 bis 7, **dadurch gekennzeichnet, dass**
- die Mess- und/oder Regelungsvorrichtung (10) mindestens einen zweiten Drucksensor (26) umfasst, und
- die erste Reglereinheit (17) dazu eingerichtet ist, ein zweites Druckfluktuationssignal als Referenzsignal von dem zweiten Drucksensor (26) zu empfangen.

10. Fluiddynamisches System (11), welches eine Strömungs- oder Verdrängermaschine (12), Leitungen (13) und zumindest eine weitere fluiddynamische Komponente (14) umfasst, **dadurch gekennzeichnet, dass** das fluiddynamische System (11) eine Mess- und/oder Regelungsvorrichtung (10) nach einem der Ansprüche 1 bis 9 aufweist.

11. Fluiddynamisches System (11) nach Anspruch 10, **dadurch gekennzeichnet, dass** der Druckfluktuationsgenerator (16) stromabwärts der Strömungs- oder Verdrängermaschine (12) und der erste Drucksensor (15) stromabwärts des Druckfluktuationsgenerator (16) im fluiddynamischen System (11) angeordnet ist.

12. Fluiddynamisches System (11) nach Anspruch 10 oder 11, **dadurch gekennzeichnet, dass** der zweite Drucksensor (26) stromabwärts der Strömungs- oder Verdrängermaschine (12) und stromaufwärts des Druckfluktuationsgenerators (16) angeordnet ist.

13. Verfahren zum Betrieb einer Mess- und/oder Regelungseinrichtung (10) nach einem der Ansprüche 1 bis 9 für ein fluiddynamisches System (11), mit den folgenden Schritten:
- Empfangen eines Druckfluktuationssignals (18) von dem ersten Drucksensor (15),
- Empfangen oder Erzeugen eines Referenzsignals,
- Erzeugen eines Steuersignals (19) aus dem Referenzsignal mittels des adaptiven Filters,
- Steuern des Druckfluktuationsgenerators (16) mit dem Steuersignal (19),
- kontinuierliches Optimieren des adaptiven Filters, um das Druckfluktuationssignal (18) zu minimieren,
- Auswerten der Filterkoeffizienten (20) des adaptiven Filters der ersten Reglereinheit (17), und
- Identifizieren von Veränderungen im fluiddynamischen System (11) aus Änderungen der Filterkoeffizienten (20) im Zeitverlauf; und/oder
- Zuordnen zu bekannten Systemzuständen der Strömungs- oder Verdrängermaschine (12) und/oder des fluiddynamischen Systems (11) und/oder Teilen des fluiddynamischen Systems (11) aus den Filterkoeffizienten (20); und/oder
- Regeln der Leistung und/oder Drehzahl der Strömungs- oder Verdrängermaschine (12) des fluiddynamischen Systems (11) mittels der Auswertung der Filterkoeffizienten (20) auf einen effizienten Betriebspunkt der Strömungs- oder Verdrängermaschine (12) im hydrodynamischen System (11).

## Claims

1. Measuring and/or control device (10) for a fluid-dynamic system (11), the fluid-dynamic system (11) comprising a flow or displacement machine (12), conduits (13), and at least one further fluid-dynamic component (14), the measuring and/or control device (10) comprising
- at least one first pressure sensor (15),
- a pressure fluctuation generator (16) for actively reducing pressure fluctuations in the fluid-dynamic system (11),
- and a first control unit (17) which has an adaptive filter having a plurality of filter coefficients (20),
- the first control unit (17) being designed to
-- receive a pressure fluctuation signal (18) from the first pressure sensor (15),
-- receive or generate a reference signal, and
-- generate a control signal (19) from the reference signal by means of the adaptive filter,
-- control the pressure fluctuation generator (16) using the control signal (19),
-- and continuously optimize the adaptive filter in order to minimize the pressure fluctuation signal (18),
**characterized in that**
- the measuring and/or control system (10) comprises a second control unit (21) which is designed to
- evaluate the filter coefficients (20) of the adaptive filter of the first control unit (17), and
-- identify changes in the fluid-dynamic system (11) from changes in the filter coefficients (20) over time; and/or
-- assign the filter coefficients (20) to known system states of the flow or displacement machine (12) and/or the fluid-dynamic system (11) and/or parts of the fluid-dynamic system (11); and/or
-- control the power and/or speed of the flow or displacement machine (12) of the fluid-dynamic system (11) for an efficient operating point of the flow or displacement machine (12) in the fluid-dynamic system (11) by means of the evaluation of the filter coefficients (20).

2. Measuring and/or control device (10) according to claim 1, **characterized in that** the second control unit (21) is designed to
- evaluate the filter coefficients (20) for a characteristic acoustic behavior of the flow or displacement machine (12).

3. Measuring and/or control device (10) according to either of the preceding claims, **characterized in that**
- the second control unit (21) comprises a neural network which is trained to recognize characteristic acoustic behavior of a flow or displacement machine (12) from the filter coefficients (20).

4. Measuring and/or control device (10) according to any of the preceding claims, **characterized in that** the second control unit is designed to
- identify a characteristic system state of the flow or displacement machine (12) from the evaluation of the filter coefficients.

5. Measuring and/or control device (10) according to any of the preceding claims, **characterized in that** the second control unit is designed to
- identify a characteristic system state of at least one further fluid-dynamic component (14) from the evaluation of the filter coefficients.

6. Measuring and/or control device (10) according to any of the preceding claims, **characterized in that** the second control unit (21) is designed to
- control the flow or displacement machine (12) for a particular characteristic acoustic behavior.

7. Measuring and/or control device (10) according to any of the preceding claims, **characterized in that** the second control unit (21) is designed to store the filter coefficients (20).

8. Measuring and/or control device (10) according to any of the preceding claims, **characterized in that**
- the actual speed (22) of the flow or displacement machine (12) can be detected and received by the first control unit (17), the first control unit (17) being designed to generate the reference signal from the actual speed (22) of the flow or displacement machine (12).

9. Measuring and/or control device (10) according to any of claims 1 to 7, **characterized in that**
- the measuring and/or control device (10) comprises at least one second pressure sensor (26), and
- the first control unit (17) is designed to receive a second pressure fluctuation signal as a reference signal from the second pressure sensor (26).

10. Fluid-dynamic system (11) which comprises a flow or displacement machine (12), conduits (13), and at least one further fluid-dynamic component (14), **characterized in that** the fluid-dynamic system (11) has a measuring and/or control device (10) according to any of claims 1 to 9.

11. Fluid-dynamic system (11) according to claim 10, **characterized in that** the pressure fluctuation generator (16) is arranged downstream of the flow or displacement machine (12) and the first pressure sensor (15) is arranged downstream of the pressure fluctuation generator (16) in the fluid-dynamic system (11).

12. Fluid-dynamic system (11) according to claim 10 or 11, **characterized in that** the second pressure sensor (26) is arranged downstream of the flow or displacement machine (12) and upstream of the pressure fluctuation generator (16).

13. Method for operating a measuring and/or control apparatus (10) according to any of claims 1 to 9 for a fluid-dynamic system (11), comprising the following steps:
- receiving a pressure fluctuation signal (18) from the first pressure sensor (15),
- receiving or generating a reference signal,
- generating a control signal (19) from the reference signal by means of the adaptive filter,
- controlling the pressure fluctuation generator (16) using the control signal (19),
- continuously optimizing the adaptive filter in order to minimize the pressure fluctuation signal (18),
- evaluating the filter coefficients (20) of the adaptive filter of the first control unit (17), and
- identifying changes in the fluid-dynamic system (11) from changes in the filter coefficients (20) over time; and/or
- assigning the filter coefficients (20) to known system states of the flow or displacement machine (12) and/or the fluid-dynamic system (11) and/or parts of the fluid-dynamic system (11); and/or
- controlling the power and/or speed of the flow or displacement machine (12) of the fluid-dynamic system (11) for an efficient operating point of the flow or displacement machine (12) in the hydrodynamic system (11) by means of the evaluation of the filter coefficients (20).

## Revendications

1. Dispositif de mesure et/ou de régulation (10) pour un système fluidodynamique (11), le système fluidodynamique (11) comprenant une turbomachine ou une machine volumétrique (12), des conduites (13) et au moins un autre composant fluidodynamique (14), le dispositif de mesure et/ou de régulation (10) comprenant :
- au moins un premier capteur de pression (15),
- un générateur de fluctuations de pression (16) pour la réduction active des fluctuations de pression dans le système fluidodynamique (11)
- et une première unité de régulation (17) avec un filtre adaptatif comportant une pluralité de coefficients de filtrage (20), dans lequel
- la première unité de régulation (17) est conçue pour :
-- recevoir un signal de fluctuation de pression (18) provenant du premier capteur de pression (15),
-- recevoir ou générer un signal de référence, et
-- générer un signal de commande (19) à partir du signal de référence au moyen du filtre adaptatif,
-- commander le générateur de fluctuations de pression (16) avec le signal de commande (19),
-- et optimiser en continu le filtre adaptatif afin de minimiser le signal de fluctuation de pression (18),
**caractérisé en ce que**
- le système de mesure et/ou de régulation (10) comprend une deuxième unité de régulation (21) qui est conçue pour :
-- évaluer les coefficients de filtrage (20) du filtre adaptatif de la première unité de régulation (17), et
-- identifier des modifications dans le système fluidodynamique (11) à partir de modifications des coefficients de filtrage (20) au cours du temps ; et/ou
-- à partir des coefficients de filtrage (20), effectuer une association à des états de système connus de la turbomachine ou de la machine volumétrique (12) et/ou du système fluidodynamique (11) et/ou de parties du système fluidodynamique (11) ; et/ou
-- réguler la puissance et/ou la vitesse de rotation de la turbomachine ou de la machine volumétrique (12) du système fluidodynamique (11) au moyen de l'évaluation des coefficients de filtrage (20) sur un point de fonctionnement efficace de la turbomachine ou de la machine volumétrique (12) dans le système fluidodynamique (11).

2. Dispositif de mesure et/ou de régulation (10) selon la revendication 1, **caractérisé en ce que** la deuxième unité de régulation (21) est conçue pour :
- évaluer les coefficients de filtrage (20) en fonction d'un comportement acoustique caractéristique de la turbomachine ou de la machine volumétrique (12).

3. Dispositif de mesure et/ou de régulation (10) selon l'une des revendications précédentes, **caractérisé en ce que**
- la deuxième unité de régulation (21) comprend un réseau neuronal qui est entraîné à reconnaître le comportement acoustique caractéristique d'une turbomachine ou d'une machine volumétrique (12) à partir des coefficients de filtrage (20).

4. Dispositif de mesure et/ou de régulation (10) selon l'une des revendications précédentes, **caractérisé en ce que** la deuxième unité de régulation est conçue pour :
- identifier un état de système caractéristique de la turbomachine ou de la machine volumétrique (12) à partir de l'évaluation des coefficients de filtrage.

5. Dispositif de mesure et/ou de régulation (10) selon l'une des revendications précédentes, **caractérisé en ce que** la deuxième unité de régulation est conçue pour :
- identifier un état de système caractéristique d'au moins un autre composant fluidodynamique (14) à partir de l'évaluation des coefficients de filtrage.

6. Dispositif de mesure et/ou de régulation (10) selon l'une des revendications précédentes, **caractérisé en ce que** la deuxième unité de régulation (21) est conçue pour :
- réguler la turbomachine ou la machine volumétrique (12) en fonction d'un comportement acoustique caractéristique déterminé.

7. Dispositif de mesure et/ou de régulation (10) selon l'une des revendications précédentes, **caractérisé en ce que** la deuxième unité de régulation (21) est conçue pour enregistrer les coefficients de filtrage (20).

8. Dispositif de mesure et/ou de régulation (10) selon l'une des revendications précédentes, **caractérisé en ce que**
- la vitesse de rotation réelle (22) de la turbomachine ou de la machine volumétrique (12) peut être détectée et être reçue par la première unité de régulation (17), la première unité de régulation (17) étant conçue pour générer le signal de référence à partir de la vitesse de rotation réelle (22) de la turbomachine ou de la machine volumétrique (12).

9. Dispositif de mesure et/ou de régulation (10) selon l'une des revendications 1 à 7, **caractérisé en ce que**
- le dispositif de mesure et/ou de régulation (10) comprend au moins un deuxième capteur de pression (26), et
- la première unité de régulation (17) est conçue pour recevoir un deuxième signal de fluctuation de pression comme signal de référence provenant du deuxième capteur de pression (26).

10. Système fluidodynamique (11) comprenant une turbomachine ou une machine volumétrique (12), des conduites (13) et au moins un autre composant fluidodynamique (14),
**caractérisé en ce que** le système fluidodynamique (11) présente un dispositif de mesure et/ou de régulation (10) selon l'une des revendications 1 à 9.

11. Système fluidodynamique (11) selon la revendication 10, **caractérisé en ce que** le générateur de fluctuations de pression (16) est disposé en aval de la turbomachine ou de la machine volumétrique (12) et le premier capteur de pression (15) est disposé en aval du générateur de fluctuations de pression (16) dans le système fluidodynamique (11).

12. Système fluidodynamique (11) selon la revendication 10 ou 11, **caractérisé en ce que** le deuxième capteur de pression (26) est disposé en aval de la turbomachine ou de la machine volumétrique (12) et en amont du générateur de fluctuations de pression (16).

13. Procédé pour faire fonctionner un dispositif de mesure et/ou de régulation (10) selon l'une des revendications 1 à 9 pour un système fluidodynamique (11), comprenant les étapes consistant à :
- recevoir un signal de fluctuation de pression (18) provenant du premier capteur de pression (15),
- recevoir ou générer un signal de référence,
- générer un signal de commande (19) à partir du signal de référence au moyen du filtre adaptatif,
- commander le générateur de fluctuations de pression (16) avec le signal de commande (19),
- optimiser en continu le filtre adaptatif afin de minimiser le signal de fluctuation de pression (18),
- évaluer les coefficients de filtrage (20) du filtre adaptatif de la première unité de régulation (17), et
- identifier des modifications dans le système fluidodynamique (11) à partir de modifications des coefficients de filtrage (20) au cours du temps ; et/ou
- associer à des états de système connus de la turbomachine ou de la machine volumétrique positif (12) et/ou du système fluidodynamique (11) et/ou de parties du système fluidodynamique (11) à partir des coefficients de filtrage (20) ; et/ou
- réguler la puissance et/ou la vitesse de rotation de la turbomachine ou de la machine volumétrique (12) du système fluidodynamique (11) au moyen de l'évaluation des coefficients de filtrage (20) sur un point de fonctionnement efficace de la turbomachine ou de la machine volumétrique (12) dans le système hydrodynamique (11).
